# EUROPÄISCHE PATENTSCHRIFT

(11) **EP 3 156 785 B1**
(45) Veröffentlichungstag und Bekanntmachung des Hinweises auf die Patenterteilung: **17.04.2019**
(21) Anmeldenummer: 16186215.6
(22) Anmeldetag: 30.08.2016
(51) Int. Cl.: G01N 23/20008, G01N 35/00

(54) **SYSTEM ZUR BEREITSTELLUNG EINER PROBE IN EINER MESSVORRICHTUNG**
SYSTEM FOR PROVIDING A SAMPLE IN A MEASURING DEVICE
SYSTEME DE FOURNITURE D'UN ECHANTILLON DANS UN DISPOSITIF DE MESURE

(30) Priorität: 13.10.2015 DE 102015117378
(43) Veröffentlichungstag der Anmeldung: 19.04.2017
(73) Patentinhaber: Deutsches Elektronen-Synchrotron DESY, 22607 Hamburg (DE); suna-precision GmbH, 22607 Hamburg (DE)
(72) Erfinder: Meents, Alke, 22607 Hamburg (DE); Brettschneider, Gunnar, 24649 Wiemersdorf (DE)
(74) Vertreter: Bird & Bird LLP

(56) Entgegenhaltungen:
- EP-A2- 1 291 647
- WO-A2-01/11345
- DE-C1- 19 851 501
- Aina E Cohen ET AL: "An automated system to mount cryo-cooled protein crystals on a synchrotron beamline, using compact sample cassettes and a small-scale robot", Journal of Applied Crystallography, 1. Dezember 2002 (2002-12-01), Seiten 720-726, XP055343454, 5 Abbey Square, Chester, Cheshire CH1 2HU, England DOI: 10.1107/S0021889802016709 Gefunden im Internet: URL:http://smb.slac.stanford.edu/facilitie s/hardware/SAM/publication/he0300.pdf

## Beschreibung

Die vorliegende Erfindung betrifft ein System zur Bereitstellung einer Probe in einer Messvorrichtung, wobei das System eine Probenaufnahme, ein Steuereinheit und eine Greifvorrichtung umfasst.

In der Röntgenstrukturanalyse werden kristallisierte Moleküle, wie zum Beispiel Proteine, mit Röntgenstrahlung vorzugsweise am Synchrotron bestrahlt. Aus der Streuung der Röntgenstrahlung kann auf die Struktur der kristallisierten Moleküle geschlossen werden. Da die ionisierende Röntgenstrahlung für Menschen gesundheitsschädlich ist, wird der Wechsel der Proben von automatisierten Systemen vorgenommen, die eine Probe eines in kristalliner Form vorliegenden Moleküls aus einem mit einer Kühlflüssigkeit gefüllten Reservoir, beispielsweise ein mit flüssigem Stickstoff gefüllter Dewar, entnehmen und in eine Messvorrichtung einsetzen, in der die Probe ebenfalls tiefgekühlt untersucht wird. Bei dem Transfer ist ein Aufwärmen der Probe zu verhindern, da dies zur Zerstörung der Probe führen kann. Hierzu weist das System eine mechanische Greifvorrichtung auf, die die Proben aus einem Probenplatz der Probenaufnahme entnimmt und in der Messvorrichtung absetzt.

Derartige mechanische Greifvorrichtungen haben sich in der Vergangenheit als fehleranfällig erwiesen. Insbesondere hat es sich als problematisch erwiesen, dass die mechanische Greifvorrichtung stark abgekühlt wird, wenn sie zur Entnahme einer Probe in das mit flüssigem Stickstoff gefüllte Reservoir eintaucht. Würden gängige Materialien und konventionelle Designs für die mechanischen Elemente der Greifvorrichtung verwendet, würden sich diese verziehen, was wiederum die Funktionalität der Greifvorrichtung einschränken würde. Zudem führt die Verwendung von Materialien wie Edelstahl aufgrund der relativ großen thermischen Leitfähigkeit zu einem Wärmeeintrag in den Dewar und damit zu einem unerwünschten zusätzlichem Verdampfen von flüssigem Stickstoff. Mechanische, für den wiederholten Einsatz unter flüssigem Stickstoff geeignete Greifvorrichtungen sind zwar bekannt, aber aufwendig in der Konstruktion und nicht zuletzt aufgrund der verwendeten Materialien teuer in der Herstellung. Neben der aufwendigen Fertigung haben die aus dem Stand der Technik bekannten mechanischen Greifvorrichtungen zudem den Nachteil, dass die verwendeten Materialien aufgrund der niedrigen Temperaturen spröde und brüchig werden. Vor dem Hintergrund der aus dem Stand der Technik bekannten Greifvorrichtungen stellt sich dem Fachmann daher die Aufgabe, ein verbessertes System zur Bereitstellung einer Probe in einer Messvorrichtung bereitzustellen, dass zumindest einige der aus dem Stand der Technik bekannten Nachteile vermeidet.

Aus der WO 01/11345 A2 ist eine automatisierte Probenbehandlungseinrichtung für die Röntgenkristallographie bekannt.

Aus der EP 1 291 647 A2 ist ein Greifsystem zum automatischen Wechseln von länglichen Proben in einem Röntgen-Analysegerät bekannt.

Aus dem Journal of Applied Crystallography, 1. Dezember 2002 (Aina E Cohen et al), Seiten 720 - 726 ist ein System zum Anbringen von auf Kryo-Temperatur gekühlten Protein-Kristallen in einem Synchrotron-Strahlrohr bekannt.

Erfindungsgemäß wird die Aufgabe durch ein System der eingangs genannten Art gelöst, bei dem die Probenaufnahme zum Einsetzen in einem mit einer Kühlflüssigkeit gefüllten Reservoir vorgesehen ist und einen ersten Probenplatz aufweist, wobei die Kühlflüssigkeit flüssiger Stickstoff ist. Der erste Probenplatz weist zur Halterung einer magnetischen oder magnetisierbaren Probe mit einer Haltekraft einen Permanentelektromagneten auf. Der Permanentelektromagnet umfasst einen Permanentmagneten und eine Spule. Die Greifvorrichtung umfasst einen Probengreifer mit einem Permanentmagneten, um eine in dem ersten Probenplatz der Probenaufnahme gehalterte Probe anzuheben. Die Steuereinheit ist mit der Spule des Permanentelektromagneten des ersten Probenplatzes so verbunden, dass die Steuereinheit den Strom durch die Spule steuern oder regeln kann, um die Haltekraft des Permanentelektromagneten zu verändern. Die Steuereinheit ist ausgebildet, um den Strom in einem Entnahmemodus derart durch die Spule des Permanentelektromagneten des ersten Probenplatzes zu steuern oder zu regeln, dass die von dem Permanentelektromagneten erzeugte Haltekraft soweit verringert wird, dass eine Probe mit dem Probengreifer
von dem ersten Probenplatz angehoben werden kann, und/oder um den Strom in einem Haltemodus derart durch die Spule des Permanentelektromagneten des ersten Probenplatzes zu steuern oder zu regeln, dass die von dem Permanentelektromagneten erzeugte Haltekraft soweit vergrößert wird, dass eine Probe nicht mit dem Probengreifer von dem ersten Probenplatz angehoben werden kann.

Mit anderen Worten umfasst das erfindungsgemäße System eine Probenaufnahme, die einen ersten Probenplatz aufweist. Der Probenplatz ist so ausgestaltet, dass eine passende Probe darauf abgesetzt werden kann. Unter einer Probe wird vorliegend nicht nur der zu untersuchende Gegenstand verstanden, sondern auch die Halterung, die es ermöglicht, den zu untersuchenden Gegenstand in einem Reservoir zu lagern, mit der Greifvorrichtung zu transportieren und in der Messvorrichtung gezielt zu platzieren, d.h., eine Probe für die Röntgenstrukturanalyse umfasst nicht nur das kristalline Protein bzw. Molekül sondern auch eine Halterung, die es ermöglicht, dass Protein in einem Dewar zu lagern, mit der Halterung von der Greifvorrichtung automatisch aus dem Dewar zu entnehmen und auf dem Messplatz der Synchrotron-Strahllinie bzw. des Röntgendiffraktometers zu platzieren.

Um eine Probe auf dem Probenplatz sicher zu halten, ist die Probe magnetisierbar oder magnetisch und der Probenplatz umfasst einen Permanentelektromagneten. Der Permanentelektromagnet umfasst einen Permanentmagneten, beispielsweise einen Stabmagneten, und eine Spule. Dabei ist die Spule so angeordnet, dass durch den Stromfluss durch die Spule, d.h., den Spulenstrom, das von dem Permanentmagneten erzeugte Magnetfeld variiert werden kann. Beispielsweise kann das Magnetfeld durch einen geeigneten Spulenstrom temporär verstärkt oder abgeschwächt werden. Die Probe, d.h., die Halterung des zu untersuchenden Gegenstandes, ist zumindest teilweise selbst magnetisch oder magnetisierbar und so ausgestaltet, dass das Magnetfeld des Permanentelektromagneten eine Haltekraft ausüben kann, mit dem die Probe auf dem Probenplatz festgehalten wird. Wird das Magnetfeld des Permanentmagneten durch den Spulenstrom verstärkt oder verringert, verändert sich auch die Haltekraft, die auf eine auf dem ersten Probenplatz angeordnete Probe ausgeübt wird.

Die Greifvorrichtung des erfindungsgemäßen Systems umfasst keine mechanischen Greifelemente, sondern einen Magneten, mit dem eine Probe aus dem ersten Probenplatz angehoben werden kann. Dies vereinfacht die Konstruktion der Greifvorrichtung deutlich, da auf jegliche mechanischen Komponenten verzichtet werden kann, die sich gegeneinander bewegen müssen, um eine Probe aus dem ersten Probenplatz zu entnehmen und beim Transport zu der Messvorrichtung und in die Gegenrichtung zu halten. Dadurch weist die Greifvorrichtung eine deutlich verringerte Fehleranfälligkeit, z.B. durch das Vereisen der beweglichen Teile, auf. Die vereinfachte Konstruktion hat zudem den Vorteil, dass aufgrund des Verzichts auf beweglichen mechanischen Elemente keine mechanischen Kräfte zum Greifen der Probe aufgebracht werden müssen, die Greifvorrichtung aus Materialen mit geringer thermischer Leitfähigkeit ausgeführt kann und der Wärmeeintrag in die Kühlflüssigkeit deutlich verringert werden kann. Zudem kann eine beschädigte Greifvorrichtung deutlich günstiger und auch in einem kürzeren Zeitrahmen ausgetauscht werden.

Bei dem Magneten des Probengreifers handelt es sich vorzugsweise um einen Permanentmagneten, durch den der Wärmeeintrag in die sich im Probengreifer im gekühlten Zustand befindende Probe und in das mit einer Kühlflüssigkeit gefüllte Reservoir minimiert werden kann. Alternativ ist auch möglich, einen Elektromagneten zu verwenden. In einer beispielhaften, bevorzugten Ausführungsform ist der Magnet ringförmig.

Das System umfasst weiterhin eine Steuervorrichtung, die mit der Spule des Permanentelektromagneten so verbunden ist, dass sie den Strom durch die Spule steuern oder regeln kann. Bei der Steuervorrichtung kann es beispielsweise um einen oder mehrere miteinander verbundene integrierte Schaltkreise oder einen Mikrocontroller handeln. Die Verbindung der Steuervorrichtung mit der Spule kann beispielsweise so ausgestaltet sein, dass die Steuervorrichtung direkt den Strom steuert oder regelt, der durch die Spule fließt. Es ist allerdings ebenso möglich, dass die Steuervorrichtung lediglich Schaltelemente steuert, mit denen der Spulenstrom durch die Spule gesteuert werden kann.

Die Steuervorrichtung ist dazu eingerichtet, beispielsweise durch entsprechende hardwaretechnische oder softwaretechnische Ausgestaltung, die Spule des Permanentelektromagneten zumindest in einem Entnahmemodus oder einem Haltemodus, vorzugsweise aber sowohl im Entnahmemodus als auch im Haltemodus zu betreiben. Im Entnahmemodus steuert oder regelt die Steuervorrichtung den Spulenstrom des Permanentelektromagneten des ersten Probenplatzes so, dass dieser ein Magnetfeld erzeugt, dass dem Magnetfeld des Permanentmagneten entgegengesetzt ist und damit das resultierende Magnetfeld des Permanentelektromagneten abschwächt. Der Strom wird dabei so gewählt, dass das Magnetfeld bzw. die von dem Magnetfeld auf eine auf dem ersten Probenplatz angeordnete Probe ausgeübte Haltekraft so gering wird, dass die Probe alleine durch eine von dem Permanentmagneten der Greifvorrichtung erzeugte Hubkraft von dem ersten Probenplatz weg angehoben werden kann. Im Haltemodus wird der Spulenstrom von der Steuervorrichtung so gesteuert oder geregelt, dass das Magnetfeld der Spule das Magnetfeld des Permanentmagneten verstärkt und das resultierende Magnetfeld eine so große Haltekraft auf eine Probe ausübt, dass die von dem Permanentmagneten der Greifvorrichtung erzeugte Hubkraft nicht ausreicht, um eine auf dem ersten Probenplatz angeordnete Probe anzuheben. Der Haltemodus kann beispielsweise aktiviert werden, wenn die Greifvorrichtung eine Probe auf dem ersten Probenplatz platziert hat, um die Probe sicher auf dem ersten Probenplatz zu halten, während die Greifvorrichtung sich von der Probe weg bewegt. In jedem Fall ist die Steuervorrichtung auch dazu eingerichtet, die Spule so zu schalten, dass sie nicht von Strom durchflossen wird und lediglich das Magnetfeld des Permanentmagneten zur Verfügung steht.

In einer Ausführungsform ist die Steuereinrichtung nur dazu eingerichtet, die Spule des Permanentelektromagneten im Entnahmemodus zu betreiben. In diesem Fall ist die von dem Permanentmagneten des Permanentelektromagneten vorzugsweise erzeugte Haltekraft so groß, dass die Greifvorrichtung eine auf dem ersten Probenplatz gehalterte Probe nur anheben kann, wenn die Steuervorrichtung die Spule im Entnahmemodus betreibt. Diese Ausführungsform hat den Vorteil, dass zusätzliche thermische Energie durch den Spulenstrom nur dann kurzfristig in die Kühlflüssigkeit eingebracht wird, wenn die Spule im Entnahmemodus betrieben wird.

Alternativ ist es auch vorstellbar, dass die Steuervorrichtung nur dazu eingerichtet ist, die Spule des Permanentelektromagneten im Haltemodus zu betreiben. In diesem Fall könnte der Permanentmagnet eine so geringe Haltekraft erzeugen, dass die Greifvorrichtung die Probe anheben kann, ohne dass das Magnetfeld des Permanentmagneten zunächst von dem von der Spule erzeugten Magnetfeld zumindest teilweise kompensiert wird. Auch diese Ausführungsform hat den Vorteil, dass nur wenig zusätzliche thermische Energie durch den Betrieb des Permanentelektromagneten in die Kühlflüssigkeit eingebracht wird.

In einer bevorzugten Ausführungsform ist die Steuervorrichtung dazu eingerichtet, die Spule des Permanentelektromagneten sowohl in einem Entnahmemodus als auch in einem Haltemodus zu betreiben. Dies hat den Vorteil, dass ein besonders zuverlässiger Betrieb des Systems gewährleistet ist, da die von dem Permanentmagneten erzeugte Haltekraft eine Probe zuverlässig festhält, aber das Magnetfeld nicht so stark ist, dass die Probe ruckartig auf den ersten Probenplatz heruntergezogen wird, bevor die Greifvorrichtung die Probe dort absetzen kann und der Haltemodus aktiviert wird. Auch umgekehrt kann der Permanentmagnet der Greifvorrichtung so ausgestaltet werden, dass die Probe nicht bereits bei einer Annäherung der Greifvorrichtung angehoben wird, sondern erst wenn die Greifvorrichtung vollständig auf der Probe positioniert und der Entnahmemodus aktiviert worden ist.

In einer bevorzugten Ausführungsform umfasst die Probenaufnahme eine Mehrzahl von weiteren Probenplätzen. Jeder der weiteren Probenplätze weist zur Halterung einer magnetischen oder magnetisierbaren Probe mit einer Haltekraft einen Permanentelektromagneten auf, wobei der Permanentelektromagnet einen Permanentmagneten und eine Spule umfasst. Die Greifvorrichtung ist weiterhin so ausgestaltet, dass mit dem Probengreifer eine Probe angehoben werden kann, sofern die Probe in einem der weiteren Probenplätze der Probenaufnahme gehaltert ist. Die Steuereinheit ist mit der Spule des Permanentelektromagneten jedes weiteren Probenplatzes so verbunden, dass die Steuereinheit den Strom durch die Spule steuern oder regeln kann, um die Haltekraft des Permanentelektromagneten jedes Probenplatzes gesondert zu verändern. Die Steuereinheit ist weiterhin ausgebildet, um den Strom derart durch die Spule des Permanentelektromagneten jedes weiteren Probenplatzes gesondert zu steuern oder zu regeln, dass in einem Entnahmemodus die von dem Permanentelektromagneten eines weiteren Probenplatzes, bei dem der Strom durch die Spule des Permanentelektromagneten von der Steuereinheit entsprechend gesteuert oder geregelt wird, erzeugte Haltekraft soweit verringert wird, dass eine Probe mit dem Probengreifer von dem einen weiteren Probenplatz angehoben werden kann, und/oder um den Strom derart durch die Spule des Permanentelektromagneten jedes einzelnen weiteren Probenplatzes gesondert zu steuern oder zu regeln, dass in einem Haltemodus die von dem Permanentelektromagneten eines weiteren Probenplatzes, bei dem der Strom durch die Spule des Permanentelektromagneten von der Steuereinheit entsprechend gesteuert oder geregelt wird, erzeugte Haltekraft soweit erhöht wird, dass eine Probe nicht mit dem Probengreifer von dem einen weiteren Probenplatz angehoben werden kann.

Mit anderen Worten umfasst das System in der bevorzugten Ausführungsform eine Probenaufnahme mit einer Mehrzahl von weiteren Probenplätzen, die wie der erste Probenplatz ausgebildet sind und ebenfalls mit der Steuereinheit verbunden sind. Die Steuereinheit ist - kurz gesagt - dazu eingerichtet - jeden der Probenplätze, d.h., die Spulen der Permanentelektromagneten jedes weiteren Probenplatzes, getrennt von den übrigen Probenplätzen so anzusteuern bzw. den Stromfluss durch die Spulen so zu steuern oder zu regeln, dass jeder Probenplatz zumindest in einem oben näher beschriebenen Entnahmemodus oder in einem ebenfalls oben bereits näher beschriebenen Haltemodus betreiben kann. Vorzugsweise ist die Steuereinrichtung so ausgestaltet, dass sie jeden der Probenplätze sowohl in einem Entnahmemodus als auch in einem Haltemodus betreiben kann.

Die Vorteile dieser bevorzugten Ausführungsform entsprechen im Wesentlichen den bereits beschrieben Vorteilen des erfindungsgemäßen Systems. Zusätzlich hat diese Ausführungsform den Vorteil, dass eine Mehrzahl von Proben bereitgehalten werden kann und das System eine Mehrzahl von Proben nacheinander zur Untersuchung in der Messvorrichtung bereitstellen kann. Dabei ist es beispielsweise bevorzugt, dass sämtliche Probenplätze des Systems identisch aufgebaut sind, um die Steuerung des Systems zu erleichtern. Allerdings sind auch Ausführungsformen denkbar, bei denen für unterschiedliche zu untersuchende Gegenstände auch unterschiedlich ausgestaltete Probenplätze vorgesehen sind.

In der vorgehendend beschrieben Ausführungsform ist vorgesehen, dass die Greifvorrichtung lediglich dazu eingerichtet ist, eine Probe zur Zeit anzuheben, d.h. der Probengreifer kann lediglich eine Probe auf einmal anheben. Es ist allerdings auch denkbar, dass andere Probengreifer vorgesehen sind, mit denen mehrere Proben auf einmal angehoben werden können. Hierzu kann die Steuereinrichtung beispielsweise so ausgestaltet sein, dass sie eine Mehrzahl von Probenplätzen gleichzeitig in einem Entnahmemodus oder einem Haltemodus betreiben kann. Dies kann beispielsweise dann sinnvoll sein, wenn die Messvorrichtung mehrere parallel mit Proben besetzbare Messplätze aufweist oder wenn ein gesamter Satz von Proben vor einer Untersuchung in dem Reservoir eingesetzt werden soll oder nach einer Untersuchung aus dem Reservoir entnommen werden soll.

In einer bevorzugten Ausführungsform ist die Steuereinheit dazu eingerichtet, in dem mit einer Kühlflüssigkeit, erfindungsgemäß mit flüssigem Stickstoff, gefüllten Reservoir angeordnet zu werden. Dies hat den Vorteil, dass nicht für jeden einzelnen Probenplatz Leitungen in das mit Kühlflüssigkeit gefüllte Reservoir von Außen eingeführt werden müssen. Insbesondere wenn das System eine Vielzahl von Probenplätzen umfasst, können auf diese Weise nicht unerheblich Kosten gespart werden, da Leitungen, die in ihrem Verlauf sowohl Raumtemperatur als auch beispielsweise der Temperatur von flüssigem Stickstoff ausgesetzt sind, äußerst robust sein müssen und oftmals aus teuren Materialen hergestellt werden. Zudem würde jede der einzelnen Leitungen eine Wärmebrücke in das mit einer Kühlflüssigkeit gefüllte Reservoir bilden und die Abwärme der Leitungen die Kühlflüssigkeit weiter erwärmen. Damit die Steuereinheit auch in einem mit einer Kühlflüssigkeit gefüllten Reservoir einsetzbar ist, muss die Elektronik der Steuereinheit für derartige Temperaturen geeignet sein. Beispielsweise könnte die Steuereinheit in CMOS Technik ausgeführt sein und Kondensatoren aus Tantal verwendet werden, wenn sie zum Einsatz in flüssigem Stickstoff geeignet sein soll.

Wenn das System eine Steuereinheit umfasst, die dazu eingerichtet ist, in dem mit einer Kühlflüssigkeit gefüllten Reservoir angeordnet zu werden, ist es bevorzugt, wenn das System eine Busleitung umfasst, die dazu eingerichtet ist, eine Strom- bzw. Spannungsversorgung der Steuereinheit bereitzustellen und/oder einen Datenverbindung zwischen der Steuereinheit und einer außerhalb des Reservoirs angeordneten Datenverarbeitungseinrichtung bereitzustellen. Auch auf diese Weise werden der Energieeintrag in die Kühlflüssigkeit und die Kosten des Systems gesenkt. Eine Datenverarbeitungseinrichtung kann beispielsweise ein herkömmlicher Computer sein oder auch ein oder mehrere Mikrocontroller. In einer beispielhaften Ausführungsform wird über eine Busleitung eine Datenverbindung zwischen der Steuereinheit und einer außerhalb des Reservoirs angeordneten Datenverarbeitungseinrichtung bereitgestellt, während für die Energieversorgung der Steuereinheit und der Permanentelektromagneten zusätzliche Versorgungsleitungen vorgesehen sind.

In einer bevorzugten Ausführungsform umfasst das System ein mit einer Kühlflüssigkeit befüllbares Reservoir, in dem die Steuereinheit und die Probenaufnahme angeordnet sind.

Es ist weiterhin bevorzugt, wenn die Steuereinheit dazu eingerichtet ist, eine Maß für eine Induktivität der Spule des Permanentelektromagneten des ersten Probenplatzes zu bestimmen. Hierzu kann die Steuereinheit beispielsweise die Spule des Permanentelektromagneten des ersten Probenplatzes und einem mit der Spule in Reihe geschalteten Widerstand mit einer sinusförmigen Wechselspannung mit konstanter Frequenz und Amplitude beaufschlagen. Ändert sich die Induktivität der Spule, so ändert sich die maximale Amplitude der Wechselspannung. Die maximale Amplitude der Wechselspannung kann damit als ein Maß für die Induktivität, das auch ein Maß für eine Änderung der Induktivität der Spule des Permanentelektromagneten des ersten Probenplatzes sein kann, verwendet werden. Aus diesem Maß kann damit darauf geschlossen werden, ob auf dem ersten Probenplatz eine Probe angeordnet ist oder nicht. Diese Information kann beispielsweise verwendet werden, um zu verhindern, dass der erste Probenplatz überhaupt von der Greifvorrichtung angesteuert wird, wenn keine Probe auf dem ersten Probenplatz angeordnet ist. Insbesondere kann diese Information aber verwendet werden, um die Aktivierung des Haltemodus bzw. des Entnahmemodus zu steuern. So kann die Steuereinrichtung beispielsweise so ausgestaltet sein, dass der Haltemodus erst aktiviert wird, wenn die Probe vollständig auf dem ersten Probenplatz angeordnet ist und sich die Induktivität des Permanentelektromagneten wie erwartet verändert hat. Damit wird ein ruckartiges Absetzen der Spule vermieden oder aber ein Festhalten der Probe, wenn die Probe nicht korrekt auf dem ersten Probenplatz abgesetzt worden ist.

Es ist weiterhin bevorzugt, wenn die Steuereinheit dazu eingerichtet ist, ein Maß für eine Induktivität der Spule des Permanentelektromagneten jedes weiteren Probenplatzes gesondert zu bestimmen. Damit ergeben sich für jeden der weiteren Probenplätze die Vorteile und Möglichkeiten, die sich bereits für den ersten Probenplatz ergeben haben.

Schließlich ist es bevorzugt, wenn die Greifvorrichtung eine Messspule umfasst, die so angeordnet ist, dass sich eine Induktivität der Messspule der Greifvorrichtung ändert, wenn eine Probe von dem Probengreifer angehoben wird, und wobei das System dazu ausgebildet ist, ein Maß für die Induktivität der Messspule zu bestimmen. Ein Maß für die Induktivität der Messspule in der Greifvorrichtung, das auch ein Maß für eine Änderung der Induktivität der Messspule sein kann, wird beispielsweise auf die gleiche Weise bestimmt, wie für die Probenplätze. Statt der Steuereinrichtung kann aber beispielsweise eine weitere Datenverarbeitungseinrichtung oder ein Mikrocontroller verwendet werden. Das Maß für die Induktivität der Messspule kann von dem System verwendet werden, um zu erkennen, ob der Probengreifer eine Probe hält. Diese Information kann beispielswiese verwendet werden, um die Aktivierung des Entnahmemodus an einem Probenplatz auszulösen, da so auf vorteilhafte Weise sichergestellt wird, dass der Entnahmemodus erst aktiviert wird, sobald der Probengreifer die Probe sicher hält.

Ein Ausführungsbeispiel eines erfindungsgemäßen Systems wird nachfolgend anhand der Zeichnungen näher erläutert, wobei
- Fig. 1: eine schematische Darstellung eines Ausführungsbeispiels eines erfindungsgemäßen Systems zeigt,
- Fig. 2: eine schematische Schnittansicht durch ein Ausführungsbeispiel eines Probenplatzes mit einer Probe und einem Ausführungsbeispiel eines Probengreifers zeigt,
- Fig. 3: eine schematische Schnittansicht durch den Probengreifer aus Fig. 2 zeigt,
- Fig. 4: eine schematische Perspektivansicht des Probengreifers aus Fig. 3 zeigt,
- Fig. 5: eine schematische Schnittansicht durch den Probenplatz aus Fig. 2 zeigt,
- Fig. 6: eine schematische Perspektivansicht des Probenplatz aus Fig. 5 zeigt,
- Fig. 7: eine schematische Schnittansicht durch die Probe aus Fig. 2 zeigt und
- Fig. 8: eine schematische Perspektivansicht der Probe aus Fig. 7 zeigt.

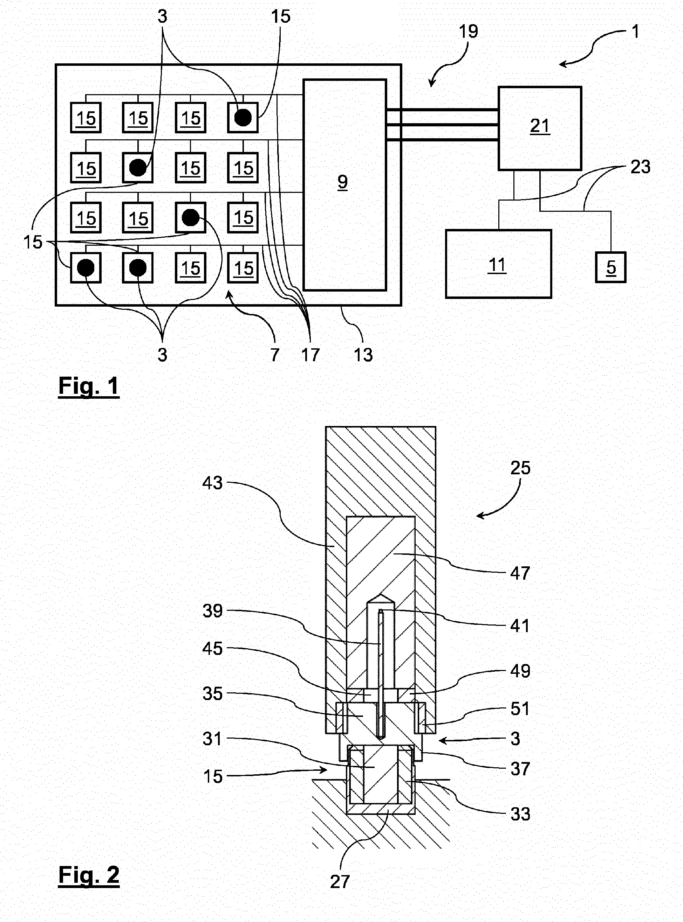

Figur 1 zeigt einen schematischen Aufbau eines Ausführungsbeispiels eines erfindungsgemäßen Systems 1 zur Bereitstellung einer Probe 3 in einer Messvorrichtung 5. Die Messvorrichtung 5 kann beispielsweise ein Röntgendiffraktometer oder ein Messplatz einer Synchrotron-Strahllinie sein. Die Proben 3 umfassen, wie nachfolgend unter Bezugnahme auf die Figuren 2, 7 und 8 noch näher beschrieben werden wird, nicht nur den eigentlich zu untersuchenden Gegenstand, beispielsweise ein in kristalliner Form vorliegendes Molekül, sondern auch eine Halterung, mit der der zu untersuchende Gegenstand gelagert und transportiert werden kann.

Das System umfasst eine Probenaufnahme 7, eine Steuereinheit 9 und eine Greifvorrichtung 11, wobei die Probenaufnahme 7 und die Steuereinheit 9 in einem mit einer Kühlflüssigkeit in Form von flüssigem Stickstoff gefüllten Reservoir 13, einem Dewar, so angeordnet sind, dass sie vollständig mit flüssigem Stickstoff bedeckt sind. Die Probenaufnahme 7 umfasst sechzehn identische Probenplätze 15, die über lediglich schematisch dargestellte Leitungen 17 mit der Steuereinheit 9 verbunden sind. Auf einem Teil der Probenplätze 15 sind Proben 3 angeordnet. Die Steuereinheit 9 ist über eine Busleitung 19 mit einer Datenverarbeitungseinrichtung 21 verbunden, die außerhalb des Reservoirs 13 angeordnet ist. Über die Busleitung 19 wird die Energieversorgung der Steuereinheit 9 und damit auch der Probenplätze 15 bereitgestellt. Gleichzeitig stellt die Busleitung 19 auch eine Datenverbindung zwischen der Datenverarbeitungseinheit 21 und der Steuereinheit 9 bereit, über die Informationen und Befehle ausgetauscht werden. Alternativ ist es auch denkbar, lediglich eine Datenversorgung über eine Busleitung bereitzustellen und für die Energieversorgung zusätzliche Leitungen zu verwenden. Durch die Verwendung einer Busleitung 19 zur Daten- und Energieversorgung der in dem Reservoir 13 angeordneten Komponenten 7, 9 des Systems 1 wird der Energieeintrag in die Kühlflüssigkeit minimiert, da nur wenige Leitungen, beispielsweise drei, benötigt werden, um sämtliche Komponenten mit Energie zu versorgen und nur eine einzige Datenleitung nötig ist. Dies senkt auch die Kosten des erfindungsgemäßen Systems 1, da nur wenige Leitungen benötigt werden, die sowohl bei Raumtemperatur als auch in der Kühlflüssigkeit einwandfrei funktionieren.

Die Datenverarbeitungseinrichtung 21 ist zudem über entsprechende Leitungen 23 mit der Greifvorrichtung 11 und der Messvorrichtung 5 verbunden. Bei der Datenverarbeitungseinrichtung 21 kann es sich beispielsweise um eine Kombination auf einem handelsüblichen Computer mit geeigneten Anschlüssen und mehreren Mikrocontrollern handeln, die verschiedene gesonderte Aufgaben übernehmen.

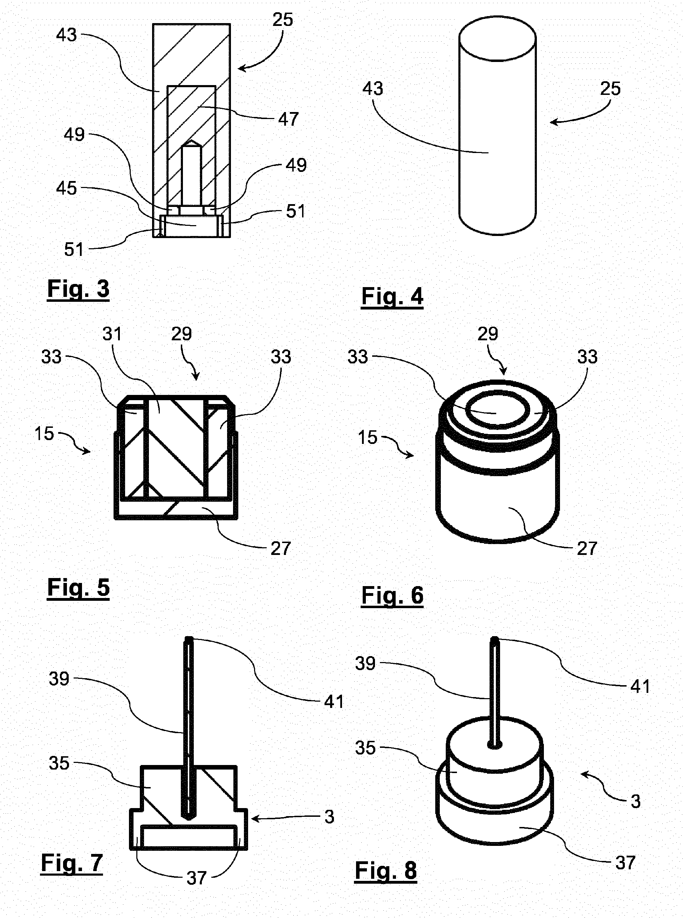

In Fig. 2 ist ein Probenplatz 15 der Probenanordnung 7 in einer Schnittansicht dargestellt, auf dem eine Probe 3 angeordnet ist, auf der wiederum ein Probengreifer 25 angesetzt ist. Jeder der Probenplätze 15 in den Figuren 1, 2, 5 und 6 kann ein erster oder ein weiterer Probenplatz 15 sein. Der Probenplatz 15, der in den Figuren 5 und 6 noch einmal einzeln dargestellt ist, umfasst eine Basis 27 und einen Permanentelektromagneten 29. Der Permanentelektromagnet 29 wird von einem Permanentmagneten 31 in Form eines Stabmagneten 31 gebildet, der von einer Spule 33 umgeben ist. In den Figuren sind die Windungen der Spule 33 nicht dargestellt. Die Spule 33 ist so angeordnet, dass das Magnetfeld der Spule 33 das Magnetfeld des Stabmagneten 31 in Abhängigkeit eines Stromes, der durch die Spule 33 fließt, entweder verstärkt oder abschwächt. Nicht dargestellt ist in den Figuren ein Anschluss für die Leitungen, mit denen die Spule 33 mit der Steuereinheit 9 verbunden werden kann.

Eine Probe 3, die mit dem System 1 in einer Messvorrichtung 5 bereitgestellt werden kann, ist in den Figuren 7 und 8 im Detail dargestellt. Die Probe 3 umfasst einen Aufsatz 35 aus einem magnetischen oder magnetisierbaren Material. Der Aufsatz 35 umfasst einen ringförmigen Vorsprung 37, der eine Ausnehmung ausbildet, die zum formschlüssigen Eingriff mit dem Probenplatz 15 ausgebildet ist. Weiterhin umfasst die Probe 3 einen stabförmigen Probenhalter 39, an dessen von dem Aufsatz 35 wegweisenden Ende der zu untersuchende Gegenstand 41, beispielweise ein kristallisiertes Molekül 41, angeordnet ist. Das System 1 ist nicht auf die Verwendung der in den Figuren 2, 7 und 8 dargestellten Proben beschränkt.

Schließlich ist in den Figuren 3 und 4 ein Probengreifer 25 einer Greifvorrichtung 11 dargestellt. Neben dem Probengreifer 25 umfasst die Greifvorrichtung 11 noch einen nicht dargestellten Roboterarm, an dessen Ende der Probengreifer 25 angeordnet ist und mit dem der Probengreifer 25 zu den verschiedenen Probenplätzen 15 der Probenaufnahme 7 und zu der Messvorrichtung 5 bewegt werden kann. Der Probengreifer 25 umfasst ein Gehäuse 43, das eine Ausnehmung 45 aufweist, die zu einem Ende hin offen ist und in der eine Probe 3 aufgenommen werden kann. Die Ausnehmung 45 ist zumindest teilweise mit einem Kühlelement 47 gefüllt, dass ein allzu schnelles Erwärmen einer Probe 3 bzw. des zu untersuchenden Gegenstandes 41 beim Transport von der Probenaufnahme 7 zu der Messvorrichtung 5 verhindert. Der Probengreifer 25 umfasst weiterhin einen Magneten 49 in Form eines ringförmigen Permanentmagneten 49, der sich ringförmig um einen Abschnitt der Ausnehmung 45 erstreckt. Ein Magnetfeld des Ringmagneten 49 ist dazu in der Lage, eine Hubkraft auf einen Probe 3 auszuüben, die ausreichend stark ist, um die Probe 3 gegen die Schwerkraft sicher zu halten.

Der in den Figuren 2, 3 und 4 dargestellte Probengreifer 25 weist damit im Gegensatz zu aus dem Stand der Technik bekannten Probengreifern keinerlei bewegliche Elemente auf. Daher kann er besonders einfach für den Einsatz auch in flüssigem Stickstoff konzipiert werden. Zudem ist der Probengreifer 25 so einfach aufgebaut, dass er bei einer Beschädigung, beispielsweise in Folge einer Kollision, kostengünstig repariert werden kann.

Der Probengreifer 25 weist ergänzend zu den bisher beschriebenen Merkmalen eine optionale aktive Komponente in Form einer Messspule 51 auf, die sich als Ringspule 51 um einen Abschnitt der Ausnehmung 45 erstreckt, der zumindest teilweise von der magnetischen oder magnetisierbaren Probe 3 ausgefüllt wird, wenn die Probe 3 zum Transport an dem Probengreifer 25 angeordnet ist. Die Messspule 51 ist über nicht im Detail dargestellte Leitungen 23 mit der Datenverarbeitungseinrichtung 21 verbunden.

Die Steuereinheit 9 ist dazu eingerichtet, jeden der sechzehn Probenplätze 15 unabhängig von den übrigen Probenplätzen 15 sowohl in einem Entnahmemodus zu betreiben als auch in einem Haltemodus. Soll einer der Probenplätze 15 im Entnahmemodus betrieben werden, so steuert oder regelt die Steuereinheit 9 den Strom durch die Spule 33 des Probenplatzes 15 so, dass das Magnetfeld der Spule 33 das Magnetfeld des Permanentmagneten 31 so weit kompensiert, dass die von dem Magnetfeld des Probengreifers 25 erzeugte Hubkraft ausreicht, um eine Probe 3 von dem Probenplatz 15 anzuheben und zu der Messvorrichtung 5 zu bewegen. Im Haltemodus steuert oder regelt die Steuereinheit 9 den Strom durch die Spule 33 wiederum so, dass das Magnetfeld der Spule 33 in die gleiche Richtung wirkt wie das Magnetfeld des Permanentmagneten 31, wodurch die Haltekraft des Permanentelektromagneten 29 so weit verstärkt wird, dass die Hubkraft des Probengreifers 25 nicht mehr ausreicht, um die Probe 3 von dem Probenplatz 15 anzuheben. Insbesondere kann der Probengreifer 25 auf vorteilhafte Weise von der Probe 3 wegbewegt werden, nachdem der Probengreifer 25 die Probe auf dem Probenplatz 15 abgesetzt hat, ohne dass am Probengreifer 25 selbst mechanische oder elektrische Veränderungen vorgenommen werden müssen, wenn der Probenplatz 15 nach dem Absetzen der Probe 3 in den Haltemodus versetzt wird.

Schließlich ist die Steuereinrichtung 9 auch dazu eingerichtet, jede der Spulen 33 der Probenplätze 15 mit einer sinusförmigen Wechselspannung mit fester Amplitude und fester Frequenz zu beaufschlagen, um eine Impedanz der Spule 33 bzw. eine Änderung der Impedanz der Spule 33 zu bestimmen. Aus der Impedanz der Spule 33 kann darauf geschlossen werden, ob eine Probe 33 auf dem dazugehörigen Probenplatz 15 angeordnet ist. Diese Information kann beispielsweise dazu verwendet werden, um festzustellen, wann eine Probe 3 von dem Probengreifer 25 vollständig auf einem Probenplatz 15 abgesetzt worden ist, so dass erst dann der Haltemodus aktiviert wird und ein ruckartiges Absetzen der Probe 3 verhindert wird. Weiterhin kann die Information, welche Probenplätze 15 eine Probe 3 halten bzw. welche frei sind, auch an die Datenverarbeitungseinheit 21 weitergegeben werden, um sicherzustellen, dass die Greifeinrichtung Proben 3 nur auf freien Probenplätzen 15 absetzt bzw. nur besetze Probenplätze anfährt, um Proben 3 anzuheben.

Schließlich ist in dem in den Figuren dargestellten Ausführungsbeispiel die Datenverarbeitungseinrichtung 21 dazu eingerichtet, eine Impedanz der Messspule 51 zu bestimmen, worauf geschlossen werden kann, ob der Probengreifer 25 eine Probe 3 hält oder nicht. Diese Information kann beispielsweise über die Busleitung 19 an die Steuereinrichtung 9 weitergegeben werden. Beispielsweise kann die Datenverarbeitungseinrichtung 21 an die Steuereinrichtung 9 Informationen übermitteln, sobald eine Probe 3 auf einem Probenplatz 15 vollständig in dem Probengreifer 25 angeordnet ist. Erst dann aktiviert die Steuereinrichtung 9 für diesen Probenplatz 15 den Entnahmemodus, so dass die Greifvorrichtung 11 die Probe 3 anheben kann. Damit wird sichergestellt, dass die Probe 3 so lange von dem Magnetfeld des Permanentmagneten des Probenplatzes 15 sicher gehalten wird, bis der Probengreifer 25 vollständig auf der Probe 3 platziert ist.

Die Steuereinheit 9 ist ebenfalls dazu eingerichtet, die Spulen 33 der Permanentelektromagneten 29 der Probenplätze 15 nicht mit Strom zu versorgen, so dass die Proben 3 lediglich von dem Magnetfeld des Permanentmagneten 31 gehalten werden. Ein Messplatz der Messvorrichtung 5 ist vergleichbar aufgebaut und steuerbar wie die Probenplätze 15.

## Patentansprüche

1. System (1) zur Bereitstellung einer Probe (3) in einer Messvorrichtung (5) umfassend eine Probenaufnahme (7), eine Steuereinheit (9) und eine Greifvorrichtung (11),
wobei die Probenaufnahme (7) zum Einsetzen in einem mit einer Kühlflüssigkeit gefüllten Reservoir (13) vorgesehen ist und einen ersten Probenplatz (15) aufweist, wobei die Kühlflüssigkeit flüssiger Stickstoff ist, **dadurch gekennzeichnet, dass** der erste Probenplatz (15) zur Halterung einer magnetischen oder magnetisierbaren Probe (3) mit einer Haltekraft einen Permanentelektromagneten (29) aufweist, wobei der Permanentelektromagnet (29) einen Permanentmagneten (31) und eine Spule (33) umfasst, wobei
die Greifvorrichtung (11) einen Probengreifer (25) mit einem Magneten (49) umfasst, um eine in dem ersten Probenplatz (15) der Probenaufnahme (7) gehalterte Probe (3) anzuheben,
wobei die Steuereinheit (9) mit der Spule (33) des Permanentelektromagneten (29) des ersten Probenplatzes (15) so verbunden ist, dass die Steuereinheit (9) den Strom durch die Spule (33) steuern oder regeln kann, um die Haltekraft des Permanentelektromagneten (29) zu verändern, und
wobei die Steuereinheit (9) ausgebildet ist,
um den Strom in einem Entnahmemodus derart durch die Spule (33) des Permanentelektromagneten (29) des ersten Probenplatzes (15) zu steuern oder zu regeln, dass die von dem Permanentelektromagneten (29) erzeugte Haltekraft soweit verringert wird, dass eine Probe (3) mit dem Probengreifer (25) von dem ersten Probenplatz (15) angehoben werden kann, und/oder
um den Strom in einem Haltemodus derart durch die Spule (33) des Permanentelektromagneten (29) des ersten Probenplatzes (15) zu steuern oder zu regeln, dass die von dem Permanentelektromagneten (29) erzeugte Haltekraft soweit vergrößert wird, dass eine Probe (3) nicht mit dem Probengreifer (25) von dem ersten Probenplatz (15) angehoben werden kann.

2. System (1) nach Anspruch 1, wobei die Probenaufnahme (7) eine Mehrzahl von weiteren Probenplätzen (15) aufweist,
wobei jeder weitere Probenplatz (15) zur Halterung einer magnetischen oder magnetisierbaren Probe (3) mit einer Haltekraft einen Permanentelektromagneten (29) aufweist, wobei der Permanentelektromagnet (29) einen Permanentmagneten (31) und eine Spule (33) umfasst,
wobei die Greifvorrichtung (11) weiterhin so ausgestaltet ist, dass mit dem Probengreifer eine Probe (3) angehoben werden kann, sofern die Probe (3) in einem der weiteren Probenplätze (15) der Probenaufnahme (7) gehaltert ist,
wobei die Steuereinheit (9) mit der Spule (33) des Permanentelektromagneten (29) jedes weiteren Probenplatzes (15) so verbunden ist, dass die Steuereinheit (9) den Strom durch die Spule (33) steuern oder regeln kann, um die Haltekraft des Permanentelektromagneten (29) jedes Probenplatzes (15) gesondert zu verändern, und
wobei die Steuereinheit (9) weiterhin ausgebildet ist,
um den Strom derart durch die Spule (33) des Permanentelektromagneten (29) jedes weiteren Probenplatzes (15) gesondert zu steuern oder zu regeln, dass in einem Entnahmemodus die von dem Permanentelektromagneten (29) eines weiteren Probenplatzes (15), bei dem der Strom durch die Spule (33) des Permanentelektromagneten (33) von der Steuereinheit (9) entsprechend gesteuert oder geregelt wird, erzeugte Haltekraft soweit verringert wird, dass eine Probe (3) mit dem Probengreifer (25) von dem einen weiteren Probenplatz (15) angehoben werden kann, und/oder
um den Strom derart durch die Spule (33) des Permanentelektromagneten (29) jedes einzelnen weiteren Probenplatzes (15) gesondert zu steuern oder zu regeln, dass in einem Haltemodus die von dem Permanentelektromagneten (29) eines weiteren Probenplatzes (15), bei dem der Strom durch die Spule (33) des Permanentelektromagneten (29) von der Steuereinheit (9) entsprechend gesteuert oder geregelt wird, erzeugte Haltekraft soweit erhöht wird, dass eine Probe (3) nicht mit dem Probengreifer (25) von dem einen weiteren Probenplatz (15) angehoben werden kann.

3. System (1) nach Anspruch 1 oder 2, wobei die Steuereinheit (9) dazu eingerichtet ist, in dem mit einer Kühlflüssigkeit gefülltem Reservoir (13) angeordnet zu werden.

4. System (1) nach Anspruch 3, wobei das System (1) eine Busleitung (19) umfasst, wobei die Busleitung (19) dazu eingerichtet ist, eine Strom- bzw. Spannungsversorgung der Steuereinheit (9) bereitzustellen und/oder eine Datenverbindung zwischen der Steuereinheit (9) und einer außerhalb des Reservoirs (13) angeordneten Datenverarbeitungseinrichtung (21) bereitzustellen.

5. System (1) nach Anspruch 3 oder 4, wobei das System (1) ein mit einer Kühlflüssigkeit befüllbares Reservoir (13) umfasst, in dem die Steuereinheit (9) und die Probenaufnahme (7) angeordnet sind.

6. System (1) nach einem der vorhergehenden Ansprüche, wobei die Steuereinheit (9) dazu eingerichtet ist, ein Maß für eine Induktivität der Spule (33) des Permanentelektromagneten (29) des ersten Probenplatzes (15) zu bestimmen.

7. System (1) nach einem der Ansprüche 2 bis 6, wobei die Steuereinheit (9) dazu eingerichtet ist, ein Maß für eine Induktivität der Spule (33) des Permanentelektromagneten (29) jedes weiteren Probenplatzes (15) gesondert zu bestimmen.

8. System (1) nach einem der vorhergehenden Ansprüche, wobei die Greifvorrichtung (11) eine Messspule (51) umfasst, die so angeordnet ist, dass sich eine Induktivität der Messspule (51) der Greifvorrichtung (11) ändert, wenn eine Probe (3) von dem Probengreifer (25) angehoben wird, und wobei das System (1) dazu ausgebildet ist, ein Maß für die Induktivität der Messspule (51) zu bestimmen.

9. System (1) nach einem der vorhergehenden Ansprüche, wobei der Magnet (49) des Probengreifers (25) ein Permanentmagnet ist.

## Claims

1. System (1) for providing a sample (3) in a measuring apparatus (5), comprising a sample holder (7), a control unit (9) and a gripping apparatus (11), wherein the sample holder (7) is intended for use in a reservoir (13) filled with a cooling liquid and comprises a first sample position (15), wherein the cooling liquid is liquid nitrogen, **characterized in that** the first sample position (15) comprises a permanent electromagnet (29) for holding a magnetic or magnetizable sample (3) with a holding force, wherein the permanent electromagnet (29) comprises a permanent magnet (31) and a coil (33), wherein
the gripping apparatus (11) comprises a sample gripper (25) with a magnet (49) in order to lift a sample (3) held in the first sample position (15) of the sample holder (7),
wherein the control unit (9) is connected to the coil (33) of the permanent electromagnet (29) of the first sample position (15) in such a manner that the control unit (9) can control or regulate the current through the coil (33) in order to change the holding force of the permanent electromagnet (29), and
wherein the control unit (9) is configured
to control or regulate the current through the coil (33) of the permanent electromagnet (29) of the first sample position (15) in an extraction mode in such a manner that the holding force generated by the permanent electromagnet (29) is reduced to such an extent that a sample (3) can be lifted from the first sample position (15) using the sample gripper (25), and/or
to control or regulate the current through the coil (33) of the permanent electromagnet (29) of the first sample position (15) in a holding mode in such a manner that the holding force generated by the permanent electromagnet (29) is increased to such an extent that a sample (3) cannot be lifted from the first sample position (15) using the sample gripper (25) .

2. System (1) according to Claim 1, wherein the sample holder (7) comprises a plurality of further sample positions (15),
wherein each further sample position (15) comprises a permanent electromagnet (29) for holding a magnetic or magnetizable sample (3) with a holding force, wherein the permanent electromagnet (29) comprises a permanent magnet (31) and a coil (33),
wherein the gripping apparatus (11) is also configured in such a manner that a sample (3) can be lifted using the sample gripper provided that the sample (3) is held in one of the further sample positions (15) of the sample holder (7),
wherein the control unit (9) is connected to the coil (33) of the permanent electromagnet (29) of each further sample position (15) in such a manner that the control unit (9) can control or regulate the current through the coil (33) in order to separately change the holding force of the permanent electromagnet (29) of each sample position (15), and
wherein the control unit (9) is also configured
to separately control or regulate the current through the coil (33) of the permanent electromagnet (29) of each further sample position (15) in such a manner that, in an extraction mode, the holding force generated by the permanent electromagnet (29) of a further sample position (15), in which the current through the coil (33) of the permanent electromagnet (33) is accordingly controlled or regulated by the control unit (9), is reduced to such an extent that a sample (3) can be lifted from the one further sample position (15) using the sample gripper (25), and/or
to separately control or regulate the current through the coil (33) of the permanent electromagnet (29) of each individual further sample position (15) in such a manner that, in a holding mode, the holding force generated by the permanent electromagnet (29) of a further sample position (15), in which the current through the coil (33) of the permanent electromagnet (29) is accordingly controlled or regulated by the control unit (9), is increased to such an extent that a sample (3) cannot be lifted from the one further sample position (15) using the sample gripper (25).

3. System (1) according to Claim 1 or 2, wherein the control unit (9) is configured to be arranged in the reservoir (13) filled with a cooling liquid.

4. System (1) according to Claim 3, wherein the system (1) comprises a bus line (19), wherein the bus line (19) is configured to provide a current or voltage supply for the control unit (9) and/or to provide a data connection between the control unit (9) and a data processing device (21) arranged outside the reservoir (13) .

5. System (1) according to Claim 3 or 4, wherein the system (1) comprises a reservoir (13) which can be filled with a cooling liquid and in which the control unit (9) and the sample holder (7) are arranged.

6. System (1) according to one of the preceding claims, wherein the control unit (9) is configured to determine a measure of an inductance of the coil (33) of the permanent electromagnet (29) of the first sample position (15).

7. System (1) according to one of Claims 2 to 6, wherein the control unit (9) is configured to separately determine a measure of an inductance of the coil (33) of the permanent electromagnet (29) of each further sample position (15).

8. System (1) according to one of the preceding claims, wherein the gripping apparatus (11) comprises a measuring coil (51) which is arranged in such a manner that an inductance of the measuring coil (51) of the gripping apparatus (11) changes if a sample (3) is lifted by the sample gripper (25), and wherein the system (1) is configured to determine a measure of the inductance of the measuring coil (51).

9. System (1) according to one of the preceding claims, wherein the magnet (49) of the sample gripper (25) is a permanent magnet.

## Revendications

1. Système (1) de fourniture d'un échantillon (3) dans un dispositif de mesure (5) comprenant une réception d'échantillon (7), une unité de commande (9) et un dispositif de préhension (11),
la réception d'échantillon (7) étant prévue pour insertion dans un réservoir (13) rempli d'un liquide réfrigérant et comportant un premier emplacement d'échantillon (15), le liquide réfrigérant étant de l'azote liquide, **caractérisé en ce que** le premier emplacement d'échantillon (15) comporte un électro-aimant permanent (29) pour maintenir avec une force de maintien un échantillon magnétique ou aimantable (3), l'électro-aimant permanent (29) comprenant un aimant permanent (31) et une bobine (33),
le dispositif de préhension (11) comprenant un préhenseur d'échantillon (25) avec un aimant (49) pour soulever un échantillon (3) maintenu dans le premier emplacement d'échantillon (15) de la réception d'échantillon (7),
l'unité de commande (9) étant reliée à la bobine (33) de l'électro-aimant permanent (29) du premier emplacement d'échantillon (15) de telle sorte que l'unité de commande (9) peut piloter ou réguler le courant à travers la bobine (33) pour modifier la force de maintien de l'électro-aimant permanent (29), et
l'unité de commande (9) étant constituée
pour piloter ou réguler le courant dans un mode de prélèvement par la bobine (33) de l'électro-aimant permanent (29) du premier emplacement d'échantillon (15) de telle sorte que la force de maintien produite par l'électro-aimant permanent (29) est réduite tant qu'un échantillon (3) peut être relevé avec le préhenseur d'échantillon (25) du premier emplacement d'échantillon (15), et/ou
pour piloter ou réguler le courant dans un mode de maintien à travers la bobine (33) de l'électro-aimant permanent (29) du premier emplacement d'échantillon (15) de telle sorte que la force de maintien produite par l'électro-aimant permanent (29) est augmentée tant qu'un échantillon (3) ne peut pas être relevé avec le préhenseur d'échantillon (25) du premier emplacement d'échantillon (15).

2. Système (1) selon la revendication 1, le prélèvement d'échantillon (7) comportant une pluralité d'autres emplacements d'échantillon (15),
chaque autre emplacement d'échantillon (15) comportant un électro-aimant permanent (29) pour maintenir un échantillon magnétique ou aimantable (3) avec une force de maintien l'électro-aimant permanent (29) comprenant un aimant permanent (31) et une bobine (33),
le dispositif de préhension (11) étant constitué en plus de telle sorte qu'un échantillon (3) peut être relevé avec le préhenseur d'échantillon dans la mesure où l'échantillon (3) est maintenu dans un emplacement d'échantillon (15) de la réception d'échantillon (7),
l'unité de commande (9) étant reliée à la bobine (33) de l'électro-aimant permanent (29) de chaque autre emplacement d'échantillon (15) de telle sorte que l'unité de commande (9) peut piloter ou réguler le courant à travers la bobine (33) pour modifier séparément la force de maintien de l'électro-aimant permanent (29) de chaque emplacement d'échantillon (15), et
l'unité de commande (9) étant constituée en plus
pour piloter ou réguler séparément le courant à travers la bobine (33) de l'électro-aimant permanent (29) de chaque autre emplacement d'échantillon (15) de telle sorte que dans un mode de prélèvement, la force de maintien produite par l'électro-aimant permanent (29) d'un autre emplacement d'échantillon (15), pour lequel le courant est piloté ou régulé par l'unité de commande (9) de façon appropriée à travers la bobine (33) de l'électro-aimant permanent (33), est réduite tant qu'un échantillon (3) peut être relevé par le préhenseur d'échantillon (25) d'un autre emplacement d'échantillon (15), et/ou
pour piloter ou réguler séparément le courant à travers la bobine (33) de l'électro-aimant permanent (29) de chaque autre emplacement d'échantillon (15) individuel de telle sorte que dans un mode de prélèvement, la force de maintien produite par l'électro-aimant permanent (29) d'un autre emplacement d'échantillon (15), pour lequel le courant est piloté ou régulé par l'unité de commande (9) de façon appropriée à travers la bobine (33) de l'électro-aimant permanent (29), est augmentée de sorte qu'un échantillon (3) ne peut pas être relevé par le préhenseur d'échantillon (25) d'un autre emplacement d'échantillon (15).

3. Système (1) selon la revendication 1 ou 2, l'unité de commande (9) étant agencée pour être disposée dans le réservoir (13) rempli d'un liquide réfrigérant.

4. Système (1) selon la revendication 3, le système (1) comprenant une ligne de bus (19), la ligne de bus (19) étant agencée pour fournir une alimentation en courant ou en tension de l'unité de commande (9) et/ou fournir une liaison de données entre l'unité de commande (9) et un système de traitement des données (21) disposé en dehors du réservoir (13).

5. Système (1) selon la revendication 3 ou 4, le système (1) comprenant un réservoir (13) pouvant être rempli d'un liquide réfrigérant dans lequel sont disposées l'unité de commande (9) et la réception d'échantillon (7).

6. Système (1) selon l'une quelconque des revendications précédentes, l'unité de commande (9) étant agencée pour déterminer une mesure pour l'inductance de la bobine (33) de l'électro-aimant permanent (29) du premier emplacement d'échantillon (15).

7. Système (1) selon l'une quelconque des revendications 2 à 6, l'unité de commande (9) étant agencée pour déterminer séparément une mesure pour une inductance de la bobine (33) de l'électro-aimant permanent (29) de chaque autre emplacement d'échantillon (15).

8. Système (1) selon l'une quelconque des revendications précédentes, le dispositif de préhension (11) comprenant une bobine de mesure (51) qui est disposée de telle sorte qu'une inductance de la bobine de mesure (51) du dispositif de préhension (11) est modifiée, lorsqu'un échantillon (3) est soulevé par le préhenseur d'échantillon (25) et le système (1) étant constitué pour déterminer une mesure pour l'inductance de la bobine de mesure (51).

9. Système (1) selon l'une quelconque des revendications précédentes, l'aimant (49) du préhenseur d'échantillon (25) étant un aimant permanent.
